(19) **Europäisches Patentamt European Patent Office Office européen des brevets**

(11) **EP 2 433 381 B1**

(12) **EUROPEAN PATENT SPECIFICATION**

(45) Date of publication and mention of the grant of the patent:
**07.05.2014 Bulletin 2014/19**

(51) Int Cl.:
***H04B 17/00*** *(2006.01)*

(21) Application number: **10728450.7**

(86) International application number:
**PCT/US2010/001467**

(22) Date of filing: **18.05.2010**

(87) International publication number:
**WO 2010/134978 (25.11.2010 Gazette 2010/47)**

(54) **METHOD AND APPARATUS FOR SPECTRUM SENSING OF FM WIRELESS MICROPHONE SIGNALS**

VERFAHREN UND VORRICHTUNG ZUR SPEKTRUMSERFASSUNG VON DRAHTLOSEN FM-MIKROPHONSIGNALEN

PROCÉDÉ ET DISPOSITIF DE DÉTECTION DE SPECTRE DE SIGNAUX DE MICROPHONE FM SANS FIL

(84) Designated Contracting States:
**AL AT BE BG CH CY CZ DE DK EE ES FI FR GB GR HR HU IE IS IT LI LT LU LV MC MK MT NL NO PL PT RO SE SI SK SM TR**

(30) Priority: **22.05.2009 US 216872 P**
**02.11.2009 US 280336 P**

(43) Date of publication of application:
**28.03.2012 Bulletin 2012/13**

(73) Proprietor: **Thomson Licensing**
**92443 Issy-les-Moulineaux Cedex (FR)**

(72) Inventors:
• **CHEN, Hou-Shin**
**East Brunswick**
**New Jersey 08816 (US)**
• **GAO, Wen**
**West Windsor**
**New Jersey 08550 (US)**

(74) Representative: **Frese, Beate et al**
**Frese-Patent**
**Hüttenallee 237b**
**47800 Krefeld (DE)**

(56) References cited:
**US-A1- 2008 024 336    US-A1- 2008 112 467**

• **SHELLHAMMER S J: "Spectrum sensing in IEEE802.22" INTERNET CITATION 9 June 2008 (2008-06-09), pages 1-6, XP002557132 Retrieved from the Internet: URL:http://www.eurasip.org/ Proceedings/Ext /CIP2008/papers/ 1569094657.pdf [retrieved on 2009-11-23]**
• **H-S CHEN ET AL: "Signature Based Spectrum Sensing Algorithms for IEEE 802.22 WRAN" PROCEEDINGS OF THE 2007 IEEE INTERNATIONAL CONFERENCE ON COMMUNICATIONS (ICC 2007), 24-28 JUNE 2007, GLASGOW, UK, IEEE, PISCATAWAY, NJ, USA, 1 June 2007 (2007-06-01), pages 6487-6492, XP031126706 ISBN: 978-1-4244-0353-0**

**Description**

FIELD OF THE INVENTION

The present principles relate to spectrum sensing of FM wireless microphone signals and systems.

BACKGROUND OF THE INVENTION

Cognitive Radio was proposed to implement negotiated, or opportunistic, spectrum sharing to improve spectrum efficiency. Recently, the Federal Communications Commission (FCC) has approved operation of unlicensed radio transmitters in the broadcast television spectrum at frequencies which are unused by licensed services (this unused TV spectrum is often termed "white space") under certain rules. A major regulation is that the white space devices will be required to sense, at levels as low as -114 dBm, TV signals (digital and analog), wireless microphone (WM) signals, and signals of other services that operate in the TV bands on intermittent basis. Hence spectrum sensing is an important enabling technique for the deployment of cognitive radios in TV white space. Note that the noise power in a 6 MHz TV channel under normal temperature is about -96 dBm assuming that the noise figure of a sensing device is 10 dB. Thus, the sensing requirement set by FCC is about -18 dB in terms of signal-to-noise power ratio (SNR) resulting in a rather difficult task.

Spectrum sensing of FM wireless microphone signals under strong interference is a very challenging task. To address this problem, a simple spectrum sensing method is developed herein that utilizes an important property of an FM signal, i.e., its autocorrelation function can be approximated as a sinusoidal function provided that the frequency deviation is much smaller than its carrier frequency and the correlation delay is small. Computer simulations demonstrate that this proposed spectrum sensor can reliably detect the target signals when a strong adjacent channel interference exists and the signal power is as low as -114 dBm, as set by the Federal Communications Commission (FCC) in their reports on so-called white space device.

A uniform framework of spectrum sensing of ATSC/NTSC signals has been proposed in a companion application (PCT/US10/000961, publ. no. WO 2010/120340 A1). The principles described herein will focus on sensing of wireless microphone signals. In the United States, wireless microphones are low-power secondary licensed signals in TV bands and are regulated by FCC Radio Broadcast Rules in Title 47 Codes of Federal Regulations (CFR), Part 74 (47CFR74). There are four main regulations for wireless microphone usage: (1) The wireless microphones are allowed to operate in unused VHF or UHF TV bands listed in 47CFR74. (2) The frequency selection shall be offset from the upper or lower band limits by 25 kHz or an integral multiple thereof. (3) One or more adjacent 25 kHz segments within the assignable frequencies may be combined to form a channel whose maximum bandwidth shall not exceed 200 kHz. (4) The maximum transmitter power is 50 mW in VHF bands and 250 mW in UHF bands. In other countries, wireless microphone operations are regulated by different agencies, but with technical characteristics generally similar to those in the United States. The majority of the wireless microphone devices use analog Frequency Modulation (FM) although other types of modulations such as digital or hybrid analog/digital modulations are also used in a variety of FM devices on the market. Blind spectrum sensing methods, e.g., Eigenvalue-Based algorithms, can be applied to sense a wireless microphone signal regardless of its modulation type. Another method is to look for a spectrum peak in the frequency domain. The bandwidth of wireless microphone signals is less than 200 kHz, much smaller than that of a TV band (6 MHz). As a result, the power of wireless microphone signals is very concentrated while the noise power is uniformly distributed over the whole 6 MHz band. Thus, a spectrum peak usually appears in the spectrum of wireless microphone signals. However, both methods produce high false alarm rates when a strong adjacent channel interference is present. The problem of sensing wireless microphone signals with the presence of adjacent channel interference is very difficult. The center frequency of a wireless microphone signal may be only 50 kHz from the adjacent channel edge in the FCC's Adjacent Channel Interference test model. Signals around this frequency band are severely affected by the interference leaked from TV signals in the lower adjacent channels. Thus, the wireless microphone signal may be fully shaded by the adjacent channel interference.

US 2008/024336 A1 discloses a long delay generator for the spectrum sensing of cognitive radio systems, comprising an Analog to Digital Converter, memory element, and Digital to Analog Converter. The generator provides a selectible delay by digitizing a received signal, digitally delaying the received signal and reconstructing the delayed signal as an analog signal, which can be compared with the original input signal using an analog auto-correlation technique to determine if a meaningful signal has been detected. An approximation of an autocorrelation function with a function comprising a sinusoidal signal is not disclosed.

In this invention, a spectrum sensing method for wireless microphone signals using FM modulation is described. The proposed method can determine the presence on FM-based wireless microphone signals even with strong adjacent channel interference. The spectrum sensing method is described below, followed by the sensing threshold setting with corresponding probability of false alarm ($P_{FA}$). The sensing performances of the proposed spectrum sensor is evaluated by computer simulations and also described, followed by a conclusion.

SUMMARY OF THE INVENTION

These and other drawbacks and disadvantages of the prior art are addressed by the present principles, which are directed to a method and apparatus for spectrum sensing of FM-based wireless microphone signals.

According to an aspect of the present principals, there is provided a method for spectrum sensing. The method includes the steps of generating an autocorrelation function on a received signal, filtering the outputof the autocorrelation function with a matched filter, generating a decision statistic by finding a maximum value of the matched filter output, and using the decision statistic to detremine occupied spectrum space, wherein the autocorrelation function is approximated with a function comprising a sinusoidal signal.

According to another aspect of the present principles, there is provided an apparatus for spectrum sensing. The apparatus includes a processing circuit for generating an autocorrelation function on a received signal, a matched filter for filtering the autocorrelation output, a decision circuit for generating a decision statistic by finding the maximum value of the matched filter output, and a detection unit for using said decision statistic to determine occupied spectrum space, wherein the autocorrelation function is approximated with a function comprising a sinusoidal signal.

According to another aspect of the present principles, there is provided another method of performing spectrum sensing. The method includes the steps of generating an autocorrelation function on a received signal, computing a higher order statistic using the autocorrelation output, generating a decision statistic by finding the maximum value of said higher order statistic, and using said decision statistic to determine occupied spectrum space, wherein the autocorrelation function is approximated with a function comprising a sinusoidal signal.

According to another aspect of the present principles, there is provided another apparatus. The apparatus includes a processing circuit for generating an autocorrelation function on a received signal, a computing circuit for calculating a higher order statistic using the autocorrelation output, a decision circuit for generating a decision statistic by finding the maximum value of the matched filter output, and a detection unit for using said decision statistic to determine occupied spectrum space, wherein the autocorrelation function is approximated with a function comprising a sinusoidal signal.

These and other aspects, features and advantages of the present principles will become apparent from the following detailed description of exemplary embodiments, which is to be read in connection with the accompanying drawings.

**BRIEF DESCRIPTION OF THE DRAWINGS**

Figure 1 shows a simulation model of wireless microphone signals.

Figure 2 shows the sensing performance of wireless microphone signals without interference and sensing time of 5 ms.

Figure 3 shows a family of Receiver Operating Characteristic (ROC) curves for wireless microphone signals without interference at different levels of SNR and sensing time of 5 ms.

Figure 4 shows the sensing performance of wireless microphone signals with interference and sensing time of 100 ms.

Figure 5 shows a family of ROC curves for wireless microphone signals with interference at different levels of SNR and sensing time of 100 ms.

Figure 6 shows the steps of a first exemplary method illustrating the principles of the present invention.

Figure 7 shows a first exemplary apparatus illustrating the principles of the present invention.

Figure 8 shows the steps of a second exemplary method illustrating the principles of the present invention.

Figure 9 shows a second exemplary apparatus illustrating the principles of the present invention.

**DETAILED DESCRIPTION**

An approach for spectrum sensing of FM wireless microphone signals is described herein.

**Autocorrelation Function of FM Signals**

Frequency modulation is an analog modulation scheme. The frequency of the sinusoidal carrier wave is varied in accordance with the baseband signal. The FM signal $x(t)$ can be described by

$$x(t) = A_c \cos\left[2\pi f_c t + 2\pi \Delta f \int_0^t m(u)du + \theta\right] \tag{1}$$

where $\theta$ is a random phase uniformly distributed on $(0, 2\pi)$ and $m(t)$ is a transmitted voice signal. It is zero-mean and its amplitude is $|m(t)| \leq 1$. The parameters $A_c$ and $f_c$ are carrier amplitude and carrier frequency, respectively. The constant $\Delta f$ is the frequency deviation of an FM modulator, representing the maximum departure of the instantaneous frequency of the FM signal from the carrier frequency $f_c$. In addition, it can be shown that the autocorrelation function of the FM signal, $x(t)$ is given by

$$R_x(\tau) = E[x(t + \tau)x(t)]$$

$$= \frac{A_c^2}{2} E\left[\cos\left(2\pi f_c \tau + 2\pi \Delta f \int_t^{t+\tau} m(u)du\right)\right] \tag{2}$$

where the first expectation is over 8 and $m(t)$ while the second expectation is over $m(t)$. The integral term inside the cosine function has a maximum value of $2\pi\Delta f \tau$. Several prior wireless microphone simulation models use a suggested maximum frequency deviation of 32.6 kHz. The carrier frequency $f_c$ is in the order of MHz. For example, let's have $f_c = 3.26$ MHz which is 100 times of the maximum value of $\Delta f$. For a period of $0 \leq \tau \leq 10$ $\mu s$, the phase variation caused by the carrier frequency is $65.2\pi$ (32.6 cycles) while only a maximum of about $0.6\pi$ is contributed by the integral term at $\tau =10$ $\mu s$. Therefore, when $f_c \gg \Delta f$ and the correlation delay $\tau$ is small, the phase variation is dominated by the carrier frequency and the contribution of the integral term can be ignored. Based on the observations above, we have

$$R_x(\tau); \frac{A_c^2}{2}\cos(2\pi f_c \tau) \tag{3}$$

given that $f_c \gg \Delta_f$ and $\tau$ is small.

Spectrum Sensing Algorithms Without Interference

Assume that the received analog signal is $r(t)$,

$$r(t) = x(t) + w(t) \tag{4}$$

where $w(t)$ is an additive white Gaussian noise (AWGN). The analog signal $r(t)$ is sampled at a sampling frequency of $f_s$ by an Analog-to-Digital Converter (ADC), i.e., $r[n] = r(n/f_s)$. The autocorrelation function is computed by

$$R_r[m] = \frac{1}{N_r}\sum_{n=0}^{N_r-1} r[n+m] \cdot r[n] \tag{5}$$

where $N_r$ is the number of samples used to compute $R_r[m]$. Note that the estimated autocorrelation function given in (5) is computed by averaging over the same number of lag products. That means not all available signal samples are utilized to compute an estimated autocorrelation function. By doing so, the sample autocorrelation function, R,[m] will have the same variance for different correlation delay $m$. The formulation of the threshold setting will also be simplified. Note that the accuracy of the estimated autocorrelation function is not affected because $N$, is much larger than the largest correlation delay. Since the FM signal $x(t)$ and noise $w(t)$ are both zero-mean and they are independent, the autocorrelation function of the received signal r[n] consists of the sum of the autocorrelation functions of these two signals,

$$R_r[m] = R_x[m] + R_w[m]$$

$$; \frac{A_c^2}{2} \cos(2\pi f_c m/f_s) + R_w[m]. \tag{6}$$

Note that, ideally, the auto correlation function of the noise, $R_w[m]$, is zero for $m \neq 0$.

In practice, although the values of $R_w[m]$ are not zero for $m \neq 0$, it is relatively small compared to the value of $R_w[0]$. If the carrier frequency of the FM signal is known, the optimal detector is a matched filter, i.e., the decision statistic of the optimal detector is given by

$$T_R(f_c) = \frac{1}{M} \sum_{m=1}^{M} R_r[m] \cdot \cos(2\pi f_c m/f_s) \tag{7}$$

where M is the number of R,[m] values computed for different $m$. However, the carrier frequency of a wireless microphone device can be any frequency within a TV channel as long as the carrier frequency offsets from TV channel edge is a multiple of 25 kHz. Assume that the received signal occupies a band from $P$ MHz to $(P+6)$ MHz. The wireless microphone devices can select $f_0 = P$ MHz +50 kHz, $f_1 = P$ MHz+75 kHz,..., $f_{Nf-1} = (P+6)$ MHz-50 kHz, as its carrier frequency. There are totally $N_f = 1 + (6$ MHz-100 kHz)/(25 kHz) = 237 possible carrier frequencies. As a result, the decision statistic of the optimal FM signal sensor is given by

$$T_R = \max_{0 \le n \le N_f - 1} T_R(f_n). \tag{8}$$

Spectrum Sensing Algorithms with Interference

When the received analog signal, $r(t)$ contains an interference signal, we have

$$r(t) = x(t) + i(t) + w(t) \tag{9}$$

where $i(t)$ is interference signal. Because the FM signal $x(t)$, interference signal $i(t)$, and noise $w(t)$ are zero-mean and they are mutually independent, the autocorrelation function of the received signal r[n] consists of the sum of the auto-correlation functions of these three signals,

$$R_r[m] = R_x[m] + R_i[m] + R_w[m]$$

$$; \frac{A_c^2}{2} \cos(2\pi f_c m/f_s) + R_i[m] + R_w[m]. \tag{10}$$

An observation is that the autocorrelation function of the interference signal, $R_i[m]$, has significantly large values when the correlation delay $m$ is small. Another observation is that like most signals, $R_i[m]$ diminishes when the correlation delay $m$ increases. The sinusoidal property of R,[m] is destroyed by $R_i[m]$ when the correlation delay $m$ is small. However, for sufficiently large $m$ , say $m \ge D$, $R_r[m]$ will reveal the sinusoidal property of the FM signal. Note that D depends on the statistic property of the adjacent channel interference and it is determined heuristically. Thus, we shall use the values of sample autocorrelation function which reflect the sinusoidal property of FM signals to form the decision statistic of an FM signal spectrum sensing device, i.e.,

$$T_R(f_c) = \frac{1}{M} \sum_{m=D}^{M+D-1} R_r[m] \cdot \cos(2\pi f_c m/f_s).$$ (11)

for a known carrier frequency $f_c$. However, recall that the approximation made in (3) is correct for small values of correlation delay. It is possible that the value of D is very large so that the approximation made in (3) is invalid. In this situation, the spectrum sensing algorithm given in (11) only works for small frequency deviations. To solve this problem, let's consider a higher order statistic given by

$$Z_x(\lambda) = \frac{1}{T} \int_{\tau=T_D}^{T_D+T} R_x(\tau+\lambda) R_x(\tau) d\tau.$$ (12)

The integration starts from $T_D$ and the result is not affected by $T_D$ as long as the integration time, $T$ is large enough. The function, $Z(\lambda)$, consists of two terms as shown.

$$Z_x(\lambda) = \frac{A_c^4}{4} \frac{1}{T} \int_{\tau=T_D}^{T_D+T} \cos\left( 2\pi f_c \lambda + 2\pi\Delta f \int_{+\tau}^{+\tau+\lambda} m(u) du \right) d\tau$$

$$+ \frac{A_c^4}{4} \frac{1}{T} \int_{\tau=T_D}^{T_D+T} \cos\left( 4\pi f_c \tau + 2\pi f_c \lambda + 2\pi\Delta f \int^{+\tau} m(u) du + 2\pi\Delta f \int^{+\tau+\lambda} m(u) du \right) d\tau$$ (13)

When T is getting large, the second term approaches zero. As a result,

$$Z_x(\lambda); \frac{A_c^4}{4} \cos(2\pi f_c \lambda)$$ . (14)

given that $f_c \gg \Delta f$ and $\lambda$ is small for the same reason in obtaining (3). Note that the function $Z(\lambda)$ is only related to the time difference of the correlation of $R(\tau)$ defined in (12). Thus, we can use $R(\tau)$ with large values of $\tau$ to compute $Z(\lambda)$.

The higher order statistic is computed by

$$Z_r[k] = \frac{1}{M-k} \sum_{n=D}^{D+M-k-1} R_r[n+k] R_r[n]$$ (15)

and

$$Z_r[k]; \frac{A_c^4}{4} \cos(2\pi f_c k/f_s) + Z_i[k] + Z_w[k].$$ (16)

The decision statistic of the optimal FM detector is then given by

$$T_Z \doteq \max_{0 \le n \le N_f - 1} T_Z(f_n)$$ (17)

where

$$T_Z(f_n) = \frac{1}{K} \sum_{k=1}^{K} Z_r[k] \cdot \cos(2\pi f_n k/f_s). \qquad (18)$$

Threshold Settling for A Specific Probability of False Alarm

Consider that there is only AWGN noise present and the autocorrelation-based spectrum sensor specified in (8) is used to perform spectrum sensing. By substituting r[n] with $w[n]$ in (5), we have

$$R_w[m] = \frac{1}{N_r} \sum_{n=0}^{N_r-1} w[n+m] \cdot w[n] \qquad (19)$$

Assume that the noise variance is $E(w^2[n]) = \sigma^2$ and from the Central Limit Theorem, when $N$, is sufficiently large, $R_w[m]$ is approaching to a zero-mean Gaussian random variable with a variance of $\dfrac{\sigma^4}{N_r}$. In addition, $\{R_w[m]\}_{m=D}^{M+D-1}$ are independently and identically distributed (i.i.d.) Gaussian Random variables. Since the addition of Gaussian random variables is still Gaussian, the random variables $\{T_R(f_n)\}_{n=0}^{N_f-1}$ are identical zero-mean Gaussian random variables with a variance of $\sigma_{T_R}^2 = \dfrac{\sigma^4}{2MN_r}$.

Consider the correlation of two sequences of $\{\cos(2\pi f_n m/f_s)\}_{n=0}^{N_f-1}$,

$$R_c(f_n, f_k) = \frac{1}{M} \sum_{m=1}^{M} \cos(2\pi f_n m/f_s) \cdot \cos(2\pi f_k m/f_s). \qquad (20)$$

When the length of the sequences, M is large enough, we have

$$R_c(f_n, f_k) = \begin{cases} \dfrac{1}{2} & f_n = f_k \\ 0 & f_n \neq f_k \end{cases} \qquad (21)$$

Thus, $\{\cos(2\pi f_n m/f_s)\}_{n=0}^{N_f-1}$ are orthogonal sequences when the length of the sequences is large enough. Hence, $\{T_R(f_n)\}_{n=0}^{N_f-1}$ are i.i.d. Gaussian random variables. Consequently, the cumulative distribution function of the decision statistic is given by

$$F_{T_R}(x:H_0) = \left( \int_{-\infty}^{x} \frac{1}{\sqrt{2\pi}\sigma_{T_R}} e^{-\frac{u^2}{2\sigma_{T_R}^2}} du \right)^{N_f}. \qquad (22)$$

Then, for a particular $P_{FA}$, the corresponding threshold $\gamma_{TR}$ can be found by

$$P_{FA} = 1 - F_T(\gamma_{T_R} : H_0). \qquad (23)$$

Finally, after some straightforward calculation, we have

$$\gamma_{T_R} = \sigma_{T_R} \cdot Q^{-1}(1-(1-P_{FA})^{1/N_f}) \qquad (24)$$

where $Q^{-1}(\cdot)$ is the inverse function of the function

$$Q(x) = \int_x^\infty \frac{1}{\sqrt{2\pi}} e^{-\frac{1}{2}u^2} du. \qquad (25)$$

When the adjacent channel interference is taken into consideration, the higher-order-statistic-based spectrum sensor specified in (18) is used to perform spectrum sensing. Because the statistic of the interference signal is unknown, the threshold can only be determined by a heuristic method. For example, we can run 10000 simulations and record the resulting statistics. For $P_{FA}$ =0.5%, the 51$^{th}$ statistic of the 10000 statistics sorted in decreasing order is the required threshold.

Simulation Results

Prior approaches have suggested three wireless microphone operating situations and two environment conditions to test spectrum sensing algorithms for wireless microphone signals. The three system operating situations are:

1. Silent Mode:

The system user is silent. In this situation, $m(t)$ is a 32 kHz sinusoid signal and the FM deviation factor is ±5 kHz.

2. Soft Speaker Mode:

The system user is a soft speaker. In this situation, $m(t)$ is modeled as a 3.9 kHz sinusoid signal with the FM deviation factor being ±15 kHz.

3. Loud Speaker Mode:

The system user is a loud speaker. In this situation, $m(t)$ is modeled as a 13.4 kHz sinusoid signal with the FM deviation factor being ±32.6 kHz.

The two environmental conditions are:

1. Outdoor, LOS:

In this case, the wireless microphone system is used in an outdoor environment where a line of sight (LOS) transmission path between transmitter and receiver exists. Therefore, it is an AWGN channel model.

2. Indoor, Rayleigh Faded:

In this case, the wireless microphone system is used in an indoor environment. Because the distance between transmitter and receiver is short, a single-path Rayleigh fading channel is good enough to model the indoor channel. Therefore, a flat fading channel is used. Moreover, the speed of the user is assumed to be 0.6 m/s. At this speed and at the maximum carrier frequency of 806 MHz, the maximum Doppler shift is computed to be 1.612 Hz. Because the maximum Doppler shift is very small, the Doppler effect can be ignored. Hence, this channel is a single-path time-invariant channel.

Furthermore, a more accurate model of voice signals is used in some prior art methods. The audio signal $m(t)$ is modelled as colored noise that is generated by passing white noise through the circuit followed by pre-emphasis filter prior to FM modulation. Here, the three operating situations in an indoor environment, as well as the colored noise voice model with $\Delta f$ = 32.6 kHz, are used to generate FM wireless microphone signals in simulations.

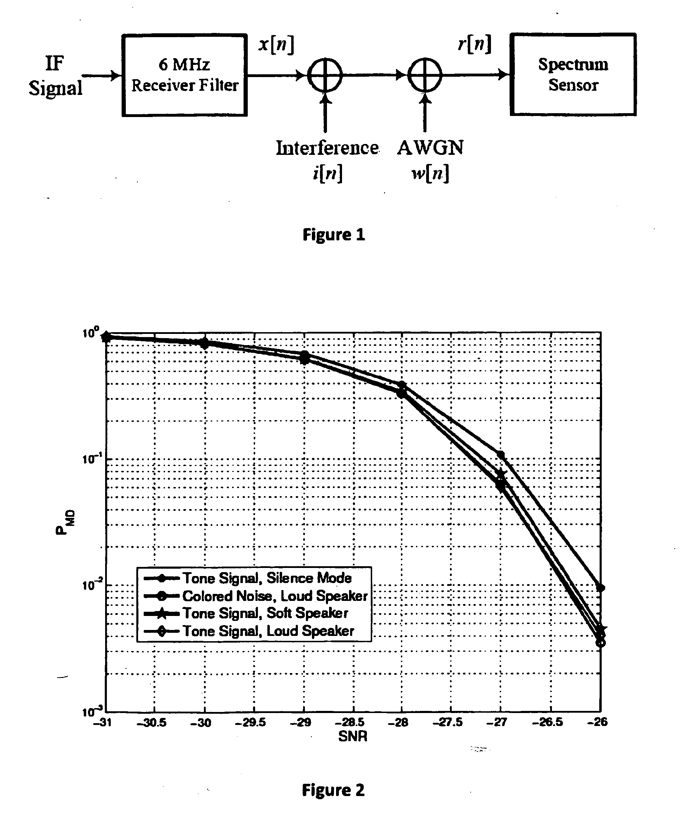

Fig. 1 illustrates the simulation model for the wireless microphone signals. The wireless microphone signals, which are converted to a lower center Intermediate Frequency ($f_{IF}$), are sampled at a rate of $f_s$ to generate discrete signals $x[n]$. If the adjacent channel interference is considered, according to the Two-Signal (Adjacent Channel Interference) model, an interference signal from the lower TV channel is added. The signal power of the lower adjacent channel is -28 dBm and the total out-of-band emission (interference) power is -90 dBm. The additive white Gaussian noise (AWGN) $w[n]$ is added to form the experimental received signal $r[n]$. We will further assume that $w[n]$ is zero-mean and the noise power spectral density (PSD) is $N_0$=-174+10=-164 dBm/Hz where -174 dBm/Hz is thermal noise power spectral density under normal temperature conditions and 10 is the noise figure of the receiver. Therefore, the noise power is $N_0B$ = -164 dBm/Hz·6MHz = -96 dBm. Note that the interference signal power is -90 dBm and the noise power is about -96 dBm. The interference-plus-noise power is -89 dBm. Thus, the sensitivity of -114 dBm set by FCC is equivalently -25 dB in terms of signal to interference-plus-noise power ratio (SINR) which is an extremely difficult condition. It is possible that wireless microphone signals are fully masked by interference signals when the carrier frequency is close to the channel edge. This makes spectrum sensing of wireless microphone signals a very difficult task. In the described simulations, the same setting of $f_{IF}$ = 5.38 MHz and $f_s$ = 21.52 MHz in are used. The carrier frequency of FM wireless microphone signals is randomly selected from $N_f$ = 237 possible carrier frequencies in a 6 MHz band from 2.38 MHz to 8.38 MHz as mentioned earlier.

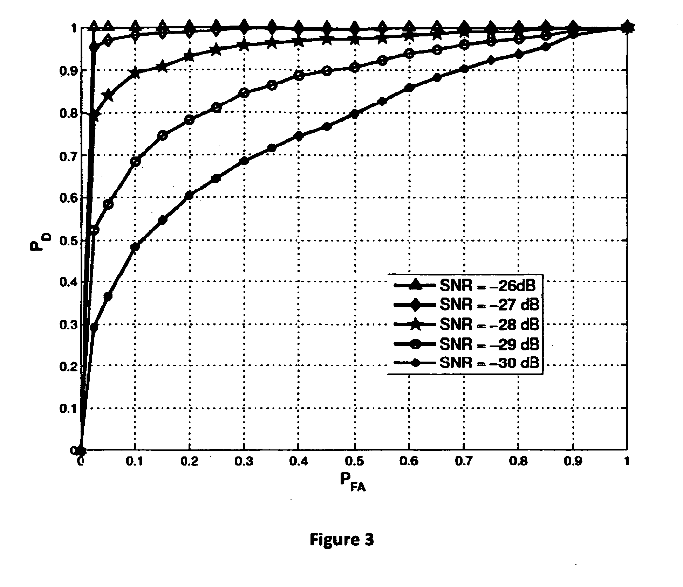

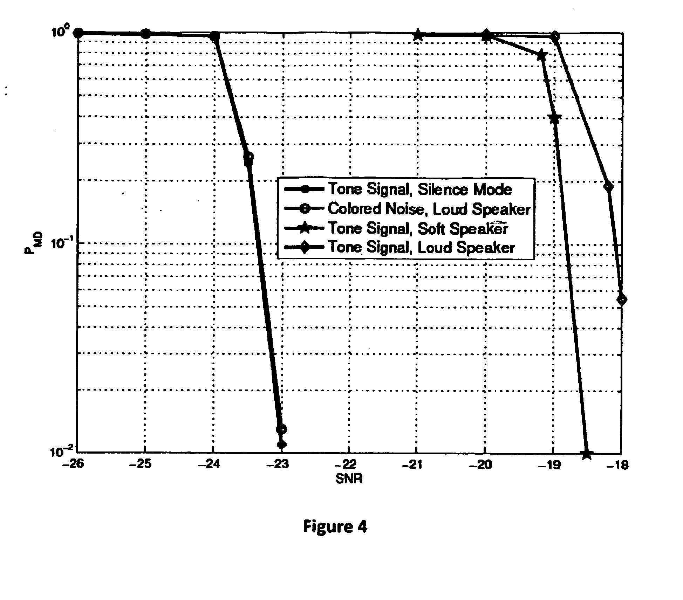

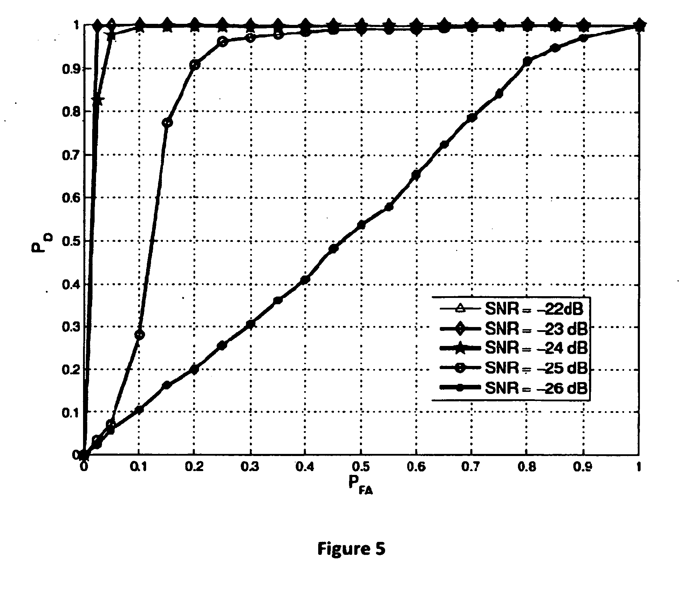

Fig. 2 shows the sensing performance of an autocorrelation detector specified in (7) and (8) for FM wireless microphone signals without interference and $P_{FA}$= 0.5% with a sensing time of 5 ms ($N_r$ =107622). The curves in the figure show the probability of miss detection ($P_{MD}$), at corresponding SNR. The parameter M is equal to 100. The sensing performances are similar for four different voice sources. The required SNR to achieve $P_{MD}$ < 0.01 is -26 dB. It demonstrates that the autocorrelation detector specified in (8) has a very promising sensing ability for FM wireless microphone signals. The sensing performance degrades when the FM frequency deviation factor increases due to the accuracy of the approximation made in (3). Figure 4 shows the sensing performance of a higher order statistic detector specified in (18) for FM wireless microphone signals with interference and $P_{FA}$= 0.5% with a sensing time of 100 ms ($N_r$ = 21524400). The parameters $D$, $M$ and $K$ are 200, 500, and 200. The sensing time is tremendously increased due to the need of averaging out interference. The required SNR to achieve $P_{MD}$ < 0.1 for all wireless microphone simulation models is -18 dB. A family of Receiver Operating Characteristic (ROC) curves at different levels of SNR is plotted in Figure 3 (without interference) and Figure 5 (with interference) to summarize the sensing performance of the proposed spectrum sensors. In these two figures, the simulation model using colored noise as a voice source is selected because it is closer to a voice signal than a tone signal. A reliable spectrum sensor should achieve high probability of detection ($P_D$) with respect to a low $P_{FA}$. From the ROC curves, the proposed FM wireless microphone spectrum sensor is reliable when SNR is -23 dB when a strong adjacent channel interference exists.

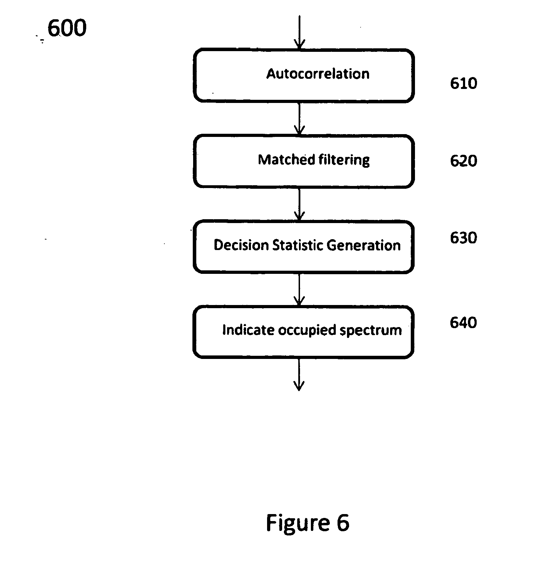

One embodiment of the present principles is illustrated in Figure 6, which shows a first exemplary method 600. The method comprises performing an autocorrelation on a received signal in step 610, which may contain FM wireless microphone signals. The autocorrelation output is next filtered by a matched filter in step 620. The matched filter output is next used to determine a decision statistic in step 630. The decision statistic is used to indicate occupied spectrum in step 640.

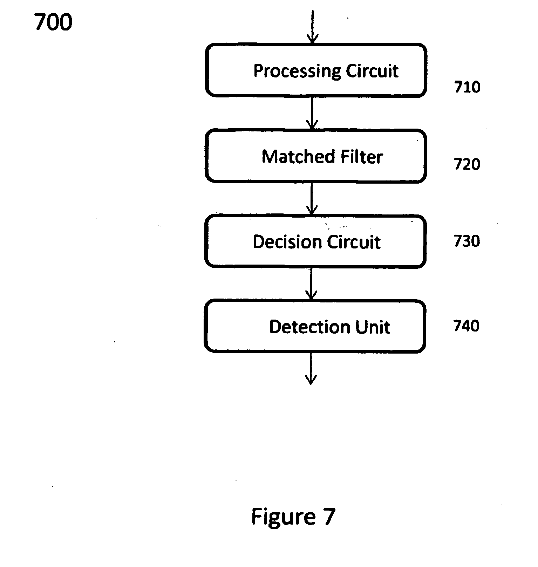

Another embodiment of the present principles is illustrated in Figure 7, which shows a first exemplary apparatus 700. The apparatus comprises a processing circuit 710 for generating an autocorrelation function on a received signal. The output of the processing circuit is connected in signal communication with a matched filter 720 for filtering the autocorrelation output of the processing circuit 710. The output of the matched filter 720 is connected in signal communication with a decision circuit 730 for generating a decision statistic by finding the maximum value of the matched filter output 720. The decision circuit 730 output is connected in signal communication with a detection unit 740 to indicate occupied spectrum space by using the decision statistic.

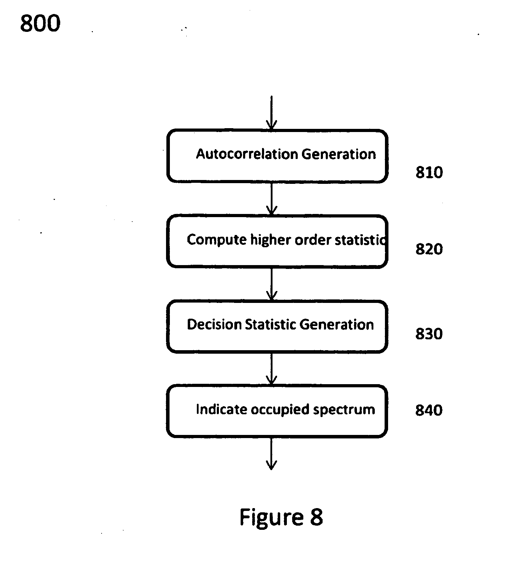

Another embodiment of the present principles is illustrated in Figure 8, which shows a second exemplary method 800. The method comprises performing an autocorrelation on a received signal in step 810, which may contain FM wireless microphone signals. The autocorrelation output is next used to compute a higher order statistic in step 820. The output of step 820 is next used to determine a decision statistic in step 830. The decision statistic is used to indicate occupied spectrum in step 840.

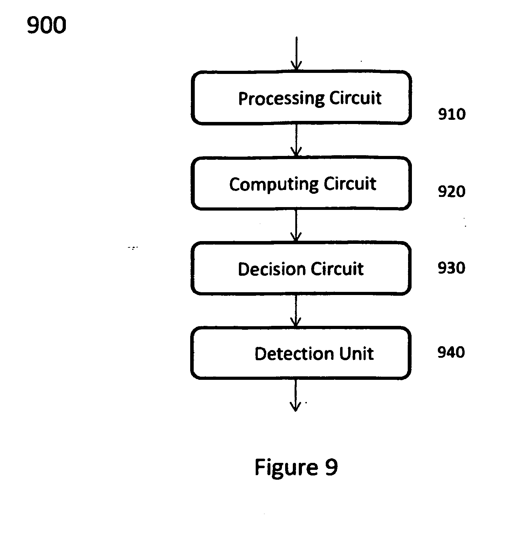

Another embodiment of the present principles is illustrated in Figure 9, which shows a first exemplary apparatus 900. The apparatus comprises a processing circuit 910 for generating an autocorrelation function on a received signal. The processing circuit output is connected in signal communication with a computing circuit 920 for calculating a higher order statistic using the autocorrelation output of the processing circuit 910. The output of the computing circuit 920 is connected in signal communication with a decision circuit 930 for generating a decision statistic by finding the maximum value of the computing circuit output 920. The decision circuit 930 output is connected in signal communication with a detection unit 940 to indicate occupied spectrum space by using the decision statistic.

The functions of the various elements shown in the figures may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" or "controller" should not be construed to refer exclusively to hardware capable of executing software, and may implicitly include, without limitation, digital signal processor ("DSP") hardware, read-only memory ("ROM") for storing software, random access memory ("RAM"), and non-volatile storage.

Other hardware, conventional and/or custom, may also be included. Similarly, any switches shown in the figures are conceptual only. Their function may be carried out through the operation of program logic, through dedicated logic, through the interaction of program control and dedicated logic, or even manually, the particular technique being selectable by the implementer as more specifically understood from the context.

A description will now be given of the many attendant advantages and features of the present principles, some of which have been mentioned above. For example, a method for spectrum sensing of FM wireless microphone signals that performs an autocorrelation function, followed by matched filtering, and generating a decision statistic which is used to determine the presence of FM wireless microphone signals within a spectrum space. Another feature is approximating the autocorrelation function in the previous method with a function comprising a sinusoidal signal. Another advantage is an apparatus for performing spectrum sensing of FM wireless microphone signals comprising a processing circuit for generating an autocorrelation function, a matched filter, a decision circuit for generating a decision statistic, and a detection unit for using the decision statistic to indicate occupied spectrum space. Yet a further advantage is the apparatus just mentioned, wherein the autocorrelation function is approximated with a function comprising a sinusoidal signal. Another advantage of the present principles is a method for spectrum sensing of FM wireless microphone signals that performs an autocorrelation function, followed by forming a higher order statistic from the autocorrelation output, and generating a decision statistic by finding the maximum value of the higher order statistic, which is used to determine the presence of FM wireless microphone signals within a spectrum space. Yet another advantage of the present principles is the method just mentioned, but wherein the higher order statistic is formed by accumulating autocorrelation function products. Yet a further advantage of the present principles is the method just mentioned, but wherein the higher order-statistic is approximated by a function comprising a sinusoidal signal. Another advantage of the present principles is an apparatus for spectrum sensing of FM wireless microphone signals comprising a processing circuit that performs an autocorrelation function in signal communication with a computing circuit for forming a higher order statistic from the autocorrelation output. The higher order statistic is input to a decision circuit for generating a decision statistic by finding the maximum value of the higher order statistic, which is used to determine the presence of FM wireless microphone signals within a spectrum space in a detection unit. A further advantage of the present principles is the apparatus just mentioned, wherein the computing circuit calculates the higher order statistic by accumulating autocorrelation function products. Yet another advantage of the present principles is the apparatus just mentioned, but wherein the computing circuit approximates the higher order statistic with a function comprising a sinusoidal signal.

The present description illustrates the present principles. It will thus be appreciated that those skilled in the art will be able to devise various arrangements that, although not explicitly described or shown herein, embody the present principles and are included within its scope.

Thus, for example, it will be appreciated by those skilled in the art that the block diagrams presented herein represent conceptual views of illustrative circuitry embodying the present principles. Similarly, it will be appreciated that any flow charts, flow diagrams, state transition diagrams, pseudocode, and the like represent various processes which may be substantially represented in computer readable media and so executed by a computer or processor, whether or not such computer or processor is explicitly shown.

In conclusion, simulation results reveal that the proposed spectrum sensor becomes reliable when the SNR is -23 dB. The spectrum sensing algorithms presented can achieve the sensing threshold of SNR =-18 dB, as specified by the FCC, when a strong adjacent channel interference exists.

**Claims**

1. A method of spectrum sensing, comprising:

> generating an autocorrelation function on a received signal (610);
> filtering said autocorrelation output using a matched filter (620);
> generating a decision statistic by finding the maximum value of the matched filter output (630); and
> indicating occupied spectrum space by using said decision statistic (640),

wherein the autocorrelation function is approximated with a function comprising a sinusoidal signal.

2. An apparatus for spectrum sensing, comprising:

a processing circuit (710) for generating an autocorrelation function on a received signal;
a matched filter (720) for filtering said autocorrelation output;
a decision circuit (730) for generating a decision statistic by finding the maximum value of the matched filter output; and
a detection unit (740) for indicating occupied spectrum space using said decision statistic,
wherein the autocorrelation function is approximated with a function comprising a sinusoidal signal.

3. A method of spectrum sensing, comprising:

generating an autocorrelation function on a received signal (810);
computing a higher order statistic using said autocorrelation output (820);
generating a decision statistic by finding the maximum value of said higher order statistic (830); and
indicating occupied spectrum space by using said decision statistic (840),
wherein the autocorrelation function is approximated with a function comprising a sinusoidal signal.

4. The method of Claim 3, wherein the higher order statistic is formed by accumulating autocorrelation function products.

5. An apparatus for spectrum sensing, comprising:

a processing circuit (910) for generating an autocorrelation function on a received signal;
a computing circut (920) for calculating a higher order statistic using said autocorrelation output;
a decision circuit (930) for generating a decision statistic by finding the maximum value of said higher order statistic; and
a detection unit (940) for indicating occupied spectrum space using said decision statistic,
wherein the autocorrelation function is approximated with a function comprising a sinusoidal signal.

6. The apparatus of Claim 5, wherein the computing circuit calculates the higher order statistic by accumulating autocorrelation function products.

**Patentansprüche**

1. Verfahren für die Erfassung eines Spektrums, wobei das Verfahren umfasst:

Erzeugen einer Autokorrelationsfunktion an einem Empfangssignal (610);
Filtern der Autokorrelationsausgabe unter Verwendung eines angepassten Filters (620);
Erzeugen einer Entseheidungsstatistik durch Ermitteln des Maximalwerts der Ausgabe des angepassten Filters (630); und
Angeben des belegten Spektralraums unter Verwendung der Entscheidungsstatistik (640), wobei die Autokorrelationsfunktion mit einer Funktion, die ein Sinussignal umfasst, genähert wird.

2. Vorrichtung für die Erfassung eines Spektrums, wobei die Vorrichtung umfasst:

eine Verarbeitungsschaltung (710) zum Erzeugen einer Autokorrelationsfunktion an einem Empfangssignal,
ein angepasstes Filter (720) zum Filtern der Autokorrelationsausgabe;
eine Entscheidungsschaltung (730) zum Erzeugen einer Entscheidungsstatistik durch Ermitteln des Maximalwerts der Ausgabe des angepassten Filters; und
eine Detektierungseinheit (740) zum Angeben des belegten Spektralraums unter Verwendung der Entscheidungsstatistik,
wobei die Autokorrelationsfunktion mit einer Funktion, die ein Sinussignal umfasst, genähert wird.

3. Verfahren für die Erfassung eines Spektrums, wobei das Verfahren umfasst:

Erzeugen einer Autokorrelationsfunktion an einem Empfangssignal (810);

Berechnen einer Statistik höherer Ordnung unter Verwendung der Autokorrelationsausgabe (820);
Erzeugen einer Entscheidungsstatistik durch Ermitteln des Maximalwerts der Statistik höherer Ordnung (830); und
Angeben des belegten Spektralraums unter Verwendung der Entscheidungsstatistik (840),
wobei die Autokorrelationsfunktion mit einer Funktion, die ein Sinussignal umfasst, genähert wird.

4. Verfahren nach Anspruch 3, wobei die Statistik höherer Ordnung durch Ansammeln von Autokorrelationsfunktionsprodukten gebildet wird.

5. Vorrichtung für die Erfassung eines Spektrums, wobei die Vorrichtung umfasst:

eine Verarbeitungsschaltung (910) zum Erzeugen einer Autokorrelationsfunktion an einem Empfangssignal;
eine Rechnerschaltung (920) zum Berechnen einer Statistik höherer Ordnung unter Verwendung der Autokorrelationsausgabe;
eine Entscheidungsschaltung (930) zum Erzeugen einer Entscheidungsstatistik durch Ermitteln des Maximalwerts der Statistik höherer Ordnung; und
eine Detektierungseinheit (940) zum Angeben des belegten Spektralraums unter Verwendung der Entscheidungsstatistik,
wobei die Autokorrelationsfunktion mit einer Funktion, die ein Sinussignal umfasst, genähert wird.

6. Vorrichtung nach Anspruch 5, wobei die Rechenschaltung die Statistik höherer Ordnung durch Ansammeln von Autokorrelationsfunktionsprodukten berechnet.

## Revendications

1. Procédé de détection de spectre, comprenant :

la génération d'une fonction d'auto-corrélation sur un signal reçu (610) ;
le filtrage de la sortie d'auto-corrélation à l'aide d'un filtre adapté (620) ;
la génération d'une statistique de décision en trouvant la valeur maximale de la sortie de filtre adapté (630) ; et
l'indication d'un espace de spectre occupé en utilisant ladite statistique de décision (640),
dans lequel la fonction d'auto-corrélation est calculée approximativement via une fonction comprenant un signal sinusoïdal.

2. Un appareil de détection de spectre, comprenant :

un circuit de traitement (710) permettant de générer une fonction d'auto-corrélation sur un signal reçu ;
un filtre adapté (720) permettant de filtrer ladite sortie d'auto-corrélation ;
un circuit de décision (730) permettant de générer une statistique de décision en trouvant la valeur maximale de ladite sortie de filtre adapté ; et
une unité de détection (740) permettant d'indiquer un espace de spectre occupé en utilisant ladite statistique de décision,
dans lequel la fonction d'auto-corrélation est calculée approximativement via une fonction comprenant un signal sinusoïdal.

3. Procédé de détection de spectre, comprenant :

la génération d'une fonction d'auto-corrélation sur un signal reçu (810) ;
le calcul d'une statistique d'ordre supérieure en utilisant ladite sortie d'auto-corrélation (820) ;
la génération d'une statistique de décision en trouvant la valeur maximale de ladite statistique d'ordre supérieure (830) ; et
l'indication d'un espace de spectre occupé en utilisant ladite statistique de décision (840) ;
dans lequel la fonction d'auto-corrélation est calculée approximativement via une fonction comprenant un signal sinusoïdal.

4. Le procédé selon la revendication 3, dans lequel la statistique d'ordre supérieure est formée par l'accumulation des produits de fonction d'auto-corrélation.

**5.** Un appareil de détection de spectre, comprenant :

un circuit de traitement (910) permettant de générer une fonction d'auto-corrélation sur un signal reçu ;
un circuit de calcul (920) permettant de calculer une statistique d'ordre supérieure en utilisant ladite sortie d'auto-corrélation ;
un circuit de décision (930) permettant de générer une statistique de décision en trouvant la valeur maximale de ladite statistique d'ordre supérieure ; et
une unité de détection (940) pour indication d'un espace de spectre occupé en utilisant ladite statistique de décision,
dans lequel la fonction d'auto-corrélation est calculée approximativement via une fonction comprenant un signal sinusoïdal.

**6.** L'appareil selon la revendication 5, dans lequel le circuit de calcul calcule la statistique d'ordre supérieure par accumulation de produits de fonction d'auto-corrélation.

**Figure 1**

**Figure 2**

**Figure 3**

**Figure 4**

**Figure 5**

600

| | |
|---|---|
| Autocorrelation | 610 |
| Matched filtering | 620 |
| Decision Statistic Generation | 630 |
| Indicate occupied spectrum | 640 |

Figure 6

700

Processing Circuit — 710

Matched Filter — 720

Decision Circuit — 730

Detection Unit — 740

Figure 7

800

Figure 8

900

```
        │
        ▼
┌─────────────────────┐
│  Processing Circuit │   910
└─────────────────────┘
        │
        ▼
┌─────────────────────┐
│  Computing Circuit  │   920
└─────────────────────┘
        │
        ▼
┌─────────────────────┐
│   Decision Circuit  │   930
└─────────────────────┘
        │
        ▼
┌─────────────────────┐
│   Detection Unit    │   940
└─────────────────────┘
        │
        ▼
```

Figure 9

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 10000961 W
- WO 2010120340 A1
- US 2008024336 A1